# EUROPÄISCHE PATENTSCHRIFT

(11) **EP 1 668 571 B1**
(45) Veröffentlichungstag und Bekanntmachung des Hinweises auf die Patenterteilung: **20.07.2011**
(21) Anmeldenummer: 04765425.6
(22) Anmeldetag: 20.09.2004
(51) Int. Cl.: G06K 19/077

(54) **TRAGBARER DATENTRÄGER**
PORTABLE DATA CARRIER
SUPPORT DE DONNEES PORTABLE

(30) Priorität: 23.09.2003 DE 10344049
(43) Veröffentlichungstag der Anmeldung: 14.06.2006
(73) Patentinhaber: Giesecke & Devrient GmbH, 81677 München (DE)
(72) Erfinder: LINKE, Andreas, 83623 Dietramszell (DE)
(74) Vertreter: Dendorfer, Claus
(86) Internationale Anmeldenummer: PCT/EP2004/010544
(87) Internationale Veröffentlichungsnummer: WO 2005/031639

(56) Entgegenhaltungen:
- EP-A- 1 429 283
- DE-U- 20 212 256
- FR-A- 2 830 107
- US-A1- 2002 066 791

## Beschreibung

Die Erfindung betrifft einen tragbaren Datenträger, insbesondere in Gestalt eines Tokens, mit einer Schnittstelle zum Datenaustausch mit einer USB-Buchse.

Tragbare Datenträger sind in Form von Chipkarten, die auch als *Smart Cards* oder *Memory Cards* bezeichnet werden, in vielfältigen Ausgestaltungen bekannt. Generell weisen Chipkarten einen dünnen Kartenkörper auf, in dem sich mindestens ein Halbleiterchip befindet. Hinsichtlich ihrer Abmessungen entsprechen Chipkarten üblicherweise den Vorgaben der Norm ISO 7810. Die hier insbesondere betrachteten kontaktgebundenen Chipkarten sind ferner in der Regel gemäß der Norm ISO/IEC 7816 ausgestaltet. Teil 1 dieser Norm definiert die physischen Eigenschaften der Chipkarte; Teil 2 gibt die Anordnung und Ausgestaltung der Kontaktanordnung auf der Chipkarte an, und Teil 3 definiert elektrische Eigenschaften und Übertragungsprotokolle. Die genannte Normen sind über die *International Organization for Standardization*, Genf, *http.*//*www.iso.ch*, erhältlich.

Zum Datenaustausch mit Chipkarten sind besondere Schnittstellenvorrichtungen erforderlich, die - abhängig davon, ob sie Bedienungs- und Anzeigeelemente aufweisen oder nicht - üblicherweise als "Terminals" oder "Kartenleser" bezeichnet werden. Die Verwendung solcher Schnittstellenvorrichtungen verursacht jedoch zusätzliche Kosten. Außerdem kann die Chipkarte nur an Geräte angeschlossen werden, die eine geeignete Schnittstellenvorrichtung aufweisen. Dies beschränkt den gegenwärtig üblichen Einsatz von Chipkarten auf einige klar umrissene Anwendungsgebiete.

Aus den internationalen Patentveröffentlichungen WO 00/16255 A1 und WO 01/69881 A2 sind Chipkarten bekannt, die zwei Schnittstellen aufweisen, nämlich eine erste Schnittstelle gemäß der Norm ISO/IEC 7816 und eine zweite Schnittstelle gemäß der USB-Norm. Unter der Bezeichnung "USB" wird im vorliegenden Dokument der *Universal Serial Bus* (Universeller Serieller Bus) verstanden, wie er in dem Dokument "Universal Serial Bus Specification" des USB Implementors Forum, Inc., Revision 2.0, 27. April 2000, verfügbar unter *http:*//*www.usb.orgldevelopersldocs.html*, beschrieben ist.

Die in den Dokumenten WO 00/16255 A1 und WO 01/69881 A2 beschriebenen Chipkarten sind jedoch lediglich in ihren elektrischen Eigenschaften und hinsichtlich der verwendeten Protokolle mit dem *Universal Serial Bus* kompatibel. Zur Übertragung der USB-Datensignale werden die bislang noch freien Kontaktflächen C4 und C8 der Kontaktanordnung gemäß ISO/IEC 7816 verwendet. Es ist daher ein spezieller Adapter erforderlich, in den die Chipkarte eingesteckt wird und der die genannten Kontaktflächen mit einem USB-Stecker verbindet. Wenngleich ein solcher Adapter weniger aufwendig als ein üblicher Kartenleser ist, so verursacht er dennoch zusätzliche Kosten. Ferner muß der Adapter ständig mitgeführt werden. Dadurch leidet die Benutzerfreundlichkeit, weil der Adapter erstens größer als die Chipkarte ist und weil er zweitens möglicherweise gerade dann nicht greifbar ist, wenn er dringend benötigt wird.

WO 03/027946 A1 offenbart ein in Chipkartentechnik hergestelltes USB-Dongle, das bei der ersten Verwendung aus einem Träger in Form einer Standardchipkarte herausbrechbar ist. Um das Dongle auf eine an eine USB-Steckeraufnahme angepaßte Stärke zu bringen wird vorgeschlagen, im Bereich des Kontaktfeldes auf der Unterseite des Dongles eine Einlage in Form einer zusätzlichen Materialschicht aufzubringen. Alternativ wird vorgeschlagen, im Bereich des Kontaktfeldes die Flanken neben dem Kontaktfeld umzubiegen. Als weitere Alternative zur Verstärkung des Kontaktbereiches wird die Verwendung eines Adapters vorgeschlagen. Die USB-Tauglichkeit wird mithin entweder durch zusätzliche Herstellungsschritte, welche die Herstellung insgesamt aufwendiger machen, oder durch Beeinträchtigung der Benutzerfreundlichkeit erreicht.

Eine Reihe bekannter Vorschläge beschäftigt sich mit der Ausgestaltung von tragbaren Datenträgern im Hinblick auf ihre Verwendung und ihre Handhabung. So schlägt WO 00/73988 A1 vor, die Handhabung einer Minichipkarte zu vereinfachen, indem die Minichipkarte als abbrechbarer Teil eines insgesamt zungenförmigen Datenträgers ausgeführt wird. WO 01/96990 A2 offenbart einen persönlichen digitalen Schlüssel für USB-Anschlüsse, der auf einem Prozessor für Chipkarten basiert. DE 197 37 565 A1 schlägt vor, ein Chipmodul auf einer Zunge anzuordnen, die über Führungsschienen wechselbar in den Kartenkörper einer Chipkarte eingeschoben werden kann. DE 298 19 389 U1 beschreibt eine Chipkarte, die gleichzeitig zwei Kartenformate abdeckt, wobei das kleinere Kartenformat klappbar mit dem Kartenkörper verbunden sein soll. EP 0 409 241 A1 schlägt vor, ein ISO-Standardkontaktfeld einer Chipkarte um weitere Kontaktflächen zu ergänzen.

US 3,702,464 beschreibt eine aus mehreren Schichten aufgebaute Informationskarte mit einem Speicherchip, von dem eine Mehrzahl von Anschlußleiterbahnen ausgeht. Eine Stirnseite der Karte ist als Kontaktzunge ausgebildet, in dem die untere Schicht mit den darauf befindlichen Leiterbahnenden durch Weglassen der darüber liegenden Schichtteile freigehalten ist.

Die genannten Lösungen lassen die Herstellung eines USB-kompatiblen tragbaren Datenträgers zu. Allerdings sind durchweg entweder die Herstellung aufwendig und/oder die Benutzerfreundlichkeit eingeschränkt.

Die Erfindung hat daher die Aufgabe, die genannten Probleme zu lösen und einen tragbaren Datenträger insbesondere in Gestalt eines Tokens bereitzustellen, der besonders einfach an externe Geräte anschließbar ist und der leicht herstellbar ist. Insbesondere soll zum Anschluß an ein externes Gerät weder eine Schnittstellenvorrichtung noch ein Adapter erforderlich sein. In bevorzugten Ausgestaltungen soll der Datenträger unmittelbar - also insbesondere ohne Adapter oder Zwischenstecker - in eine USB-Buchse eines Computers, eines USB-Hubs oder eines USB-Verlängerungskabels einsteckbar sein.

Erfindungsgemäß wird diese Aufgabe gelöst durch einen tragbaren Datenträger mit den Merkmalen des Hauptanspruchs. Die abhängigen Ansprüche definieren bevorzugte Ausgestaltungen der Erfindung.

Die Erfindung basiert auf der in ihrer Einfachheit überraschenden Erkenntnis, daß sich ein erfindungsgemäßer tragbarer Datenträger einfach in Form einer nicht normgemäßen Chipkarte herstellen läßt, indem deren Außenabmessungen, insbesondere ihre Dicke, und die Lage der Schnittstelle darauf so gewählt werden, daß der Datenträger an der Schnittstellenseite unmittelbar einen voll zu einer externen USB-Buchse kompatiblen Stecker bildet und in eine externe USB-Buchse paßt. Derartige Datenträger lassen sich mittels gängiger Herstellungsmethoden fertigen, wie sie in der Chipkartenfertigung eingesetzt werden. In einer an sich übliche Chipkartenfertigung ist lediglich das Einbringen einer oder ggf. mehrerer zusätzlich Zwischenschichten in gleicher Technologie sowie eine modifizierte Außenformgebung einzurichten. Besondere Fertigungsschritte oder eine Nachbearbeitung sind aber nicht erforderlich.

Erfindungsgemäße Datenträger eignen sich als in Hardware ausgeführte Softwareschlüssel oder "Token", mit denen z.B. die Berechtigung eines Nutzers zur Nutzung eines Gerätes nachgewiesen wird.

In bevorzugter Ausgestaltung ist die externe USB-Buchse eine Flachbuchse vom Typ "A", welche die Kontaktzunge seitlich umschließt. Die Breite einer zum Einstecken in eine solche Buchse ausgelegten Kontaktzunge beträgt ungefähr 12 mm. Dies ist schmaler als die Breiten der drei gebräuchlichen, durch die Norm ISO 7810 definierten Chipkartenformate ID-1, ID-00 und ID-000.

Der erfindungsgemäße Datenträger eignet sich besonders zum Anschluß an übliche Computer. Bevorzugt sind alle aktiven Schnittstellenkontakte des Datenträgers mit mindestens einem Halbleiterchip verbunden, welcher - beispielsweise auf die in den Dokumenten WO 00/16255 A1 und WO 01/69881 A2 beschriebene Weise - die elektrischen Signale beider Schnittstellen empfängt, sendet und verarbeitet.

Ein bevorzugtes Anwendungsgebiet der Erfindung sind sogenannte Internet-Chipkarten, die einen kompakten Internet-Server implementieren. Ein auf einem externen Computer laufender Internet-Browser kommuniziert über die USB-Schnittstelle mit dem Server und stellt eine Benutzeroberfläche zur Interaktion mit der Chipkarte bereit. Die Erfindung ist jedoch auch für viele weitere Anwendungsgebiete nützlich, so z.B. immer dann, wenn umfangreiche Daten zwischen einer Chipkarte und einem externen Gerät übertragen werden sollen.

Weitere Merkmale, Aufgaben und Vorteile der Erfindung ergeben sich aus der folgenden Beschreibung. Es wird auf die nachfolgenden schematischen Zeichnungen verwiesen, wobei die Fig. 1 bis 5 nichterfindungsgemäße Beispiele zeigen, die das Verständnis der Erfindung erleichtern. Es zeigen:
Fig.1 eine Draufsicht auf einen tragbaren Datenträger in Gestalt einer Chipkarte,
Fig. 2 eine Seitenansicht der Chipkarte von Fig. 1 mit einer herausgebogenen, in eine USB-"A"-Buchse eingesteckten Kontaktzunge,
Fig. 3 eine vergrößerte Schnittdarstellung entlang der Linie III - III in Fig. 2,
Fig. 4 eine vergrößerte Ansicht der Kontaktanordnung von Fig. 1, in die zusätzliche Schnittstellenkontakte integriert sind,
Fig. 5 eine gegenüber Fig. 4 abgewandelte Ausführungsform der Kontaktanordnung und der zusätzlichen Schnittstellenkontakte, und
Fig. 6 und 7 eine Draufsicht sowie einen Querschnitt durch einen erfindungsgemäßen, zur Verwendung in einer USB-Buchse eingerichteten tragbaren Datenträger.

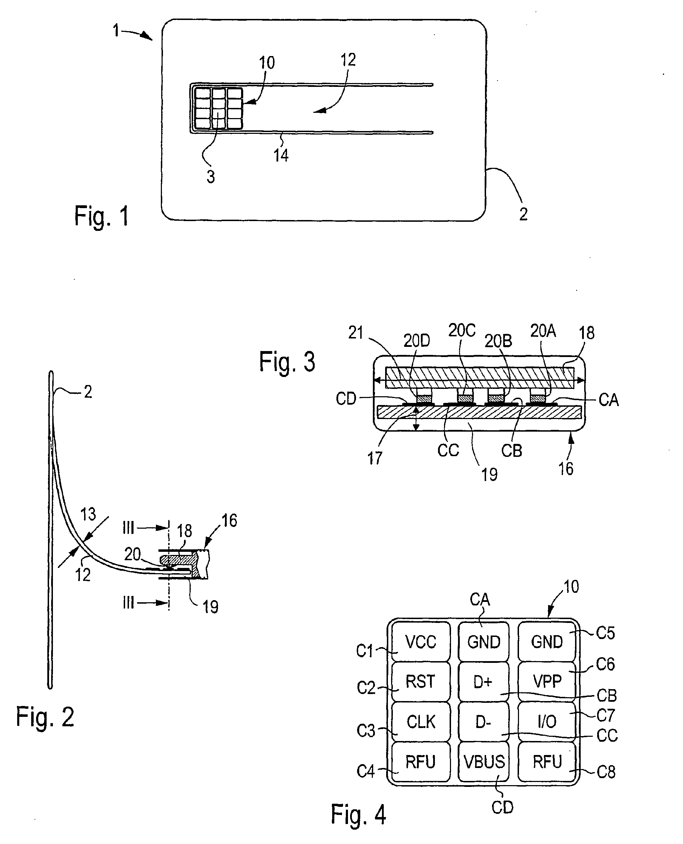

Fig. 1 zeigt einen tragbaren Datenträger 1 in Gestalt einer Chipkarte mit einem Kartenkörper 2, in den ein Modul 3 eingebettet ist, worin sich ein Halbleiterchip mit einem integrierten Schaltkreis 4 befindet, und einer Kontaktanordnung 10. Die Chipkarte entspricht in ihren Außenabmessungen dem Format ID-1 gemäß der Norm ISO 7810. Die Chipkarte weist eine erste und eine zweite Schnittstelle zur Kommunikation mit externen Geräten auf. Hierbei ist die erste Schnittstelle eine "übliche" Chipkartenschnittstelle, die in ihren physischen und elektrischen Eigenschaften und hinsichtlich der eingesetzten Protokolle der Norm ISO/IEC 7816 entspricht. Die zweite Schnittstelle ist im vorliegenden Beispiel eine USB-Schnittstelle, mittels derer die Chipkarte unmittelbar an einen Computer oder ein sonstiges mit einer USB-"A"-Buchse ausgestattetes Gerät angeschlossen werden kann.

An der durch Teil 2 der Norm ISO/IEC 7816 definierten Position weist die Chipkarte eine Kontaktanordnung 10 auf, die in Fig. 4 genauer dargestellt ist. Die Kontaktanordnung 10 enthält an den ebenfalls durch Teil 2 der Norm ISO/IEC 7816 definierten Stellen insgesamt acht Schnittstellenkontakte C1, C2, C3, C4, C5, C6, C7, C8 der ersten Schnittstelle. Ferner sind in die Kontaktanordnung 10 gemäß Fig. 1 und Fig. 4 insgesamt vier weitere Schnittstellenkontakte CA, CB, CC, CD integriert, die der zweiten Schnittstelle zugeordnet sind. Im vorliegenden Beispiel sind sämtliche Schnittstellenkontakte C1 - C8 und CA - CD als mit der Chipkarten-Oberfläche ungefähr bündige Kontaktflächen ausgestaltet, während in Abwandlungen insbesondere für die zusätzlichen Schnittstellenkontakte CA - CD andere Ausgestaltungen vorgesehen sein können.

Die Kontaktanordnung 10 befindet sich auf einer Kontaktzunge 12, die dadurch gebildet ist, daß ein dreiseitig umlaufender, U-förmiger Schlitz in das Trägermaterial der Chipkarte eingearbeitet ist. An dem in Fig. 1 rechts gezeigten Ansatzpunkt der Kontaktzunge 12 geht die Kontaktzunge 12 integral in die restliche Chipkarte über. Die Dicke 13 der Kontaktzunge 12 entspricht der normgemäßen Dicke der Chipkarte. An der in Fig. 1 links gezeigten Spitze der Kontaktzunge befindet sich die Kontaktanordnung 10. Die Breite der Kontaktzunge 12 beträgt im vorliegenden Beispiel ungefähr 12 mm, während die Kontaktanordnung 10 - gemäß Teil 2 der Norm ISO/IEC 7816 - vom oberen Rand des Kontaktfeldes CA zum unteren Rand des Kontaktfeldes CD eine Mindestgröße von ungefähr 9,3 mm aufweist.

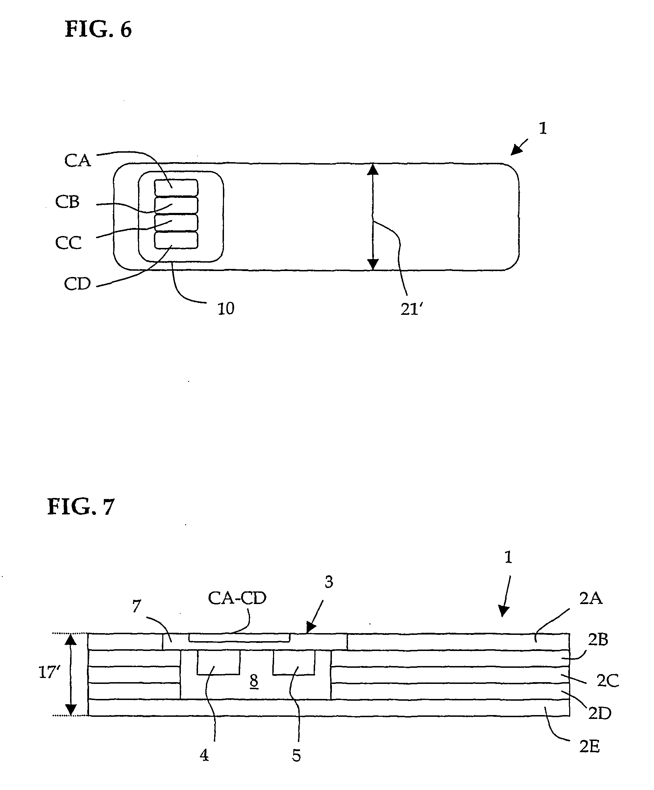

Als Material für den Kartenkörper wird im vorliegenden Beispiel ein flexibles Kunststoffmaterial, beispielsweise PVC, ABS oder PET, verwendet. In das Trägermaterial der Chipkarte ist in an sich bekannter Weise ein Halbleiterchip eingearbeitet, der in Fig. 1 von dem Kontaktfeld 10 verdeckt ist. Der Kartenkörper kann auch besonders hochwertige Materialien wie Folienverbundwerkstoffe oder Metalle aufweisen, um eine hohe Lebensdauer zu gewährleisten. Dies gilt insbesondere für die unten noch genauer zu beschreibenden AusführungsBeispielen gemäß Fig. 6 - Fig. 7.

Bei der Ausgestaltung gemäß Fig. 1 besteht die Kontaktzunge 12 aus demselben flexiblen Material wie der restliche Kartenkörper. Daher kann die Kontaktzunge 12 ohne Beschädigung aus der durch die Chipkarte definierten Ebene herausgebogen werden, wie dies in Fig. 2 gezeigt ist. Die Kontaktzunge 12 paßt wegen ihrer Breite von ungefähr 12 mm genau in eine an sich bekannte USB-Buchse 16 vom Typ "A". In der Darstellung von Fig. 2 ist die zum Betrachter weisende Seitenwand der USB-Buchse 16 teilweise weggebrochen gezeichnet, so daß ein Kontakthalter 18 und eine Kontaktfeder 20 sichtbar sind. Wie aus Fig. 2 in Verbindung mit Fig. 4 hervorgeht, ist der Abstand der zur USB-Schnittstelle gehörenden Schnittstellenkontakte CA - CD von der Spitze der Kontaktzunge 12 so gewählt, daß die Kontaktfeder 20 der USB-Buchse 16 bei maximal eingesteckter Kontaktzunge 12 eine elektrische Verbindung mit einem dieser Schnittstellenkontakte CA - CD herstellt.

Aus dem in Fig. 3 dargestellten Querschnitt ist ersichtlich, daß im eingesteckten Zustand der Kontaktzunge 12 je eine von vier Kontaktfedern 20A, 20B, 20C, 20D der USB-Buchse 16 je einen der vier zur USB-Schnittstelle gehörenden Schnittstellenkontakte CA - CD kontaktiert. Dies trifft im vorliegenden Beispiel trotz der Tatsache zu, daß die Ausgestaltung der Schnittstellenkontakte CA - CD als Kontaktfelder und ihre Dimensionierung an die Norm ISO/IEC 7816 - und nicht primär an die USB-Norm - angelehnt ist. Die Kontaktfedern 20A - 20D liegen daher, wie in Fig. 3 dargestellt, nicht genau mittig auf den Kontaktflächen der Schnittstellenkontakte CA - CD auf; dies ist jedoch unschädlich. Alternativ ist dagegen vorgesehen, die Schnittstellenkontakte CA - CD weitgehend gemäß den Vorgaben der USB-Norm auszugestalten.

Im Betrieb kann die Chipkarte in ihrer flachen, in Fig. 1 gezeigten Konfiguration wie eine übliche ISO/IEC-7816-Chipkarte verwendet und beispielsweise in ein Kartenterminal oder einen Kartenleser eingeführt werden. Der in der Chipkarte befindliche Halbleiterchip erkennt diese erste Betriebsweise und stellt elektrisch und logisch eine ISO/IEC-7816-kompatible Schnittstelle zur Verfügung, deren Signale über die acht Schnittstellenkontakte C1- C8 der Kontaktanordnung 10 geführt werden.

Ferner kann die Chipkarte, wie in Fig. 2 gezeigt, unmittelbar in die USB-Buchse 16 beispielsweise eines Computers oder eines anderen Geräts eingesteckt werden. Der Halbleiterchip der Chipkarte paßt sich auch diesem zweiten Betriebsmodus an, indem er eine elektrisch und logisch USB-kompatible Schnittstelle bereitstellt, deren Signale über die vier zusätzlichen Schnittstellenkontakte CA - CD laufen. Wird die Chipkarte aus der USB-Buchse 16 herausgezogen, so biegt sich die Kontaktzunge 12 durch die Elastizität des für die Chipkarte verwendeten Trägermaterials in die Chipkartenebene zurück, so daß wieder die flache Konfiguration gemäß Fig. 1 erreicht ist.

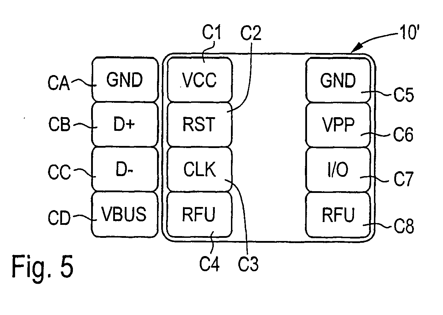

Fig. 5 zeigt eine Ausführung der Schnittstellenkontakte, bei der die zusätzliche Schnittstellenkontakte CA - CD der zweiten Schnittstelle - vorliegend der USB-Schnittstelle -nicht in die ISO/IEC-7816-kompatible Kontaktanordnung 10 sind. Vielmehr befinden sich die zusätzlichen Schnittstellenkontakte CA - CD unmittelbar neben einer Kontaktanordnung 10', die exakt der Norm ISO/IEC 7816 entspricht und die nur die acht gemäß dieser Norm vorgesehenen Schnittstellenkontakte C1 - C8 aufweist. Die Ausgestaltung nach Fig. 5 ermöglicht es, die Schnittstellenkontakte CA - CD besonders nahe an der Spitze der Kontaktzunge 12 anzuordnen. Überdies wird vermieden, daß die Kontaktfedern 20A - 20D beim Einstecken der Kontaktzunge 12 in die USB-Buchse 16 kurzzeitig über die Schnittstellenkontakte C1 - C4 streifen.

Die vorstehend beschriebenen Ausgestaltungen beruhen auf dem Ansatz, daß der tragbare Datenträger 1 zumindest die Funktionalität einer Chipkarte besitzt und entsprechend zwei Schnittstellen, nämlich eine ISO- und eine USB-Schnittstelle aufweist. In der erfindungsgemäßen, in den Fig. 6 und 7 veranschaulichten Ausgestaltung des vorgeschlagenen Konzeptes reduziert sich der tragbare Datenträger 1 gänzlich auf eine Kontaktzunge 12 und besitzt vorzugsweise nur noch eine USB-Schnittstelle; allerdings sind selbstverständlich auch Gestaltungsvarianten der Schnittstelle wie vorstehend beschrieben ohne weiteres möglich. Dergestalt fungiert der tragbare Datenträger z.B. als Sicherheitstoken zum Nachweis einer Berechtigung mittels eines auf dem Token gespeicherten Softwareschlüssels.

Die Außenabmessungen des in den Fig. 6, 7 gezeigten tragbaren Datenträgers 1 genügen nicht mehr der Chipkarten-Norm ISO 7810, sondern sind auf eine USB- Buchse 16 abgestimmt. Die vordere Breite 21' entspricht daher paßgenau der Breite 21 einer USB-Buchse 16. Weiter besitzt der Kartenkörper 2 eine auf die Höhe 17 des unter den Kontaktfedern 20A - 20D einer USB-Buchse 16 liegenden Steckraum19 es angepaßte, nicht normgerechte Dicke 17'. Die erhöhte Dicke läßt sich bei Herstellung in einfacher Weise realisierten, indem der Kartenkörper 2 in üblicher Weise wie eine Chipkarte aus mehreren Schichten 2A - 2E aufgebaut, dabei aber eine entsprechend dickere Innenschicht oder zusätzliche Innenschichten 2B - 2D in den Kartenkörperaufbau eingebracht werden.

Abgestimmt auf eine USB-Buchse 16 besitzt die Kontaktanordnung 10, wie in Fig. 6 veranschaulicht, genau vier Schnittstellenkontakte CA - CD, deren Position auf die Lage der Kontaktfedern 20A - 20D einer USB-Buchse 16 ausgerichtet ist, so daß sie nach Einstecken des Datenträgers 1 in eine USB-Buchse genau unter diesen zu liegen kommen.

Zweckmäßig befindet sich die Kontaktanordnung 10, wie in Fig. 7 angedeutet, auf der Oberseite eines Modules 3, an dessen Unterseite der integrierte Schaltkreis 4 angeordnet ist. Das Modul 3 wird vorzugsweise nach Art eines Chipkartenmodules, d.h. basierend auf einem Substrat 7, das eine geeignete Folie sein kann, hergestellt und in den Kartenkörper 2 eingebettet, typischerweise in eine darin vorbereitete Ausnehmung 8. Lediglich die Gestalt der Kontaktanordnung 10 wird als USB-Schnittstelle abgewandelt. Um für Chipkarten übliche integrierte Schaltkreise 4 einsetzen zu können, wird in dem Modul 3 zweckmäßig ferner ein zusätzlicher integrierter Schaltkreis 5 angeordnet, dessen Funktion darin besteht, dem integrierten Schaltkreis 4 Hilfsfunktionen zur Verfügung zu stellen, insbesondere ein Taktsignal, die zum Betrieb eines Chipkartenschaltkreises an einer USB-Schnittstelle erforderlich sind.

## Patentansprüche

1. Verfahren zur Herstellung eines tragbaren Datenträgers mit einem Kartenkörper, in den ein integrierter Schaltkreis eingebettet ist, sowie einer Schnittstelle, die Schnittstellenkontakte (CA - CD) nutzt, welche zu Gegenkontakten (20A-20D) korrespondieren, die an einen Steckraum (19) liegen, dessen Höhe größer ist als die für Chipkarten in der Norm ISO 7810 vorgegebene Höhe, wobei die Dicke (17') des Kartenkörpers (2) über seine ganze Länge auf die Höhe des Steckraumes (19) abgestimmt ist, **dadurch gekennzeichnet, daß** der Kartenkörper aus mehreren Schichten (2A-2E), umfassend wenigstens zwei Deckschichten (2A, 2E) sowie eine Innenschicht (2B, 2C, 2D) entsprechend der üblichen Herstellung einer Chipkarte mit einer Dicke gemäß ISO 7810 bestehend aus mehreren Schichten aufgebaut wird, und wobei entweder eine Innenschicht (2B, 2C, 2D) entsprechend dicker ausgebildet wird oder wenigstens eine zusätzliche Innenschicht eingebracht wird, so dass die Dicke des Schichtaufbaus auf die Abmessungen des unter den Gegenkontakten (20A - 20D) befindlichen Steckraumes abgestimmt ist, und wobei auch die Breite (21') des Schichtaufbaus (12) auf die Abmessungen des unter den Gegenkontakten (20A - 20D) befindlichen Steckraumes (19) abgestimmt wird.

2. Nach dem Verfahren gemäß Anspruch 1 hergestellter tragbarer Datenträger, **dadurch gekennzeichnet, daß** die Schnittstelle eine USB-Schnittstelle ist.

3. Nach dem Verfahren gemäß Anspruch 1 hergestellter tragbarer Datenträger, **dadurch gekennzeichnet, daß** Höhe (17') und Breite (21') des Schichtaufbaus auf die Abmessungen einer USB-Buchse abgestimmt sind.

4. Nach dem Verfahren gemäß Anspruch 1 hergestellter tragbarer Datenträger, **dadurch gekennzeichnet, daß** der integrierte Schaltkreis (4) an der Unterseite eines in den Kartenkörper (2) eingesetzten Modules (3) angeordnet ist, an dessen Oberseite die Schnittstellenkontakte (CA - CD) ausgebildet sind.

5. Tragbarer Datenträger nach Anspruch 4, **dadurch gekennzeichnet, daß** in dem Modul (3) ein zweiter integrierter Schaltkreis (5) ausgebildet ist, der mit dem ersten verbunden ist und diesem ein Taktsignal liefert.

## Claims

1. Method for the production of a portable data carrier with a card body into which an integrated circuit is embedded, and an interface utilising interface contacts (CA - CD) that correspond to mating contacts (20A-20D) that lie at an insertion space (19) whose height is greater than the height prescribed for chip cards in the standard ISO 7810, wherein the thickness (17') of the card body (2), over its entire length, is adapted to the height of the insertion space (19), **characterised in that** the card body is constructed of several layers (2A-2E) comprising at least two cover layers (2A, 2E) as well as one inner layer (2B, 2C, 2D) in accordance with the customary production of a chip card with a thickness according to ISO 7810 consisting of several layers, and wherein either one inner layer (2B, 2C, 2D) is configured correspondingly thicker or at least one additional inner layer is introduced, so that the thickness of the layer structure is adapted to the dimensions of the insertion space located beneath the mating contacts (20A - 20D), and wherein the width (21') of the layer structure (12) is also adapted to the dimensions of the insertion space (19) located beneath the mating contacts (20A - 20D).

2. Portable data carrier produced according to the method according to claim 1, **characterised in that** the interface is a USB interface.

3. Portable data carrier produced according to the method according to claim 1, **characterised in that** the height (17') and width (21') of the layer structure are adapted to the dimensions of a USB socket.

4. Portable data carrier produced according to the method according to claim 1, **characterised in that** the integrated circuit (4) is disposed on the underside of a module (3) that is inserted into the card body (2) and on whose top side the interface contacts (CA - CD) are formed.

5. Portable data carrier according to claim 4, **characterised in that**, in the module (3), a second integrated circuit (5) is formed which is connected to the first one and supplies it with a clock signal.

## Revendications

1. Procédé de fabrication d'un support de données portable avec un corps de carte, dans lequel est incorporé un circuit intégré, ainsi qu'une interface qui utilise des contacts d'interface (CA - CD) qui correspondent à des contre-contacts (20A-20D) situés sur un compartiment d'enfichage dont la hauteur est supérieure à la hauteur imposée pour les cartes à puce dans la norme ISO 7810, la hauteur (17') du corps de carte (2) étant adaptée sur toute sa longueur à la longueur du compartiment d'enfichage (19), **caractérisé en ce que** le corps de carte est composé de plusieurs couches (2A-2E), comprenant au moins deux couches de couverture (2A, 2E) et une couche intérieure (2B, 2C, 2D) correspondant à la fabrication traditionnelle d'une carte à puce d'une épaisseur conforme à ISO 7810 et constituée de plusieurs couches, et dans lequel soit une couche intérieure (2B, 2C, 2D) est réalisée plus épaisse, soit au moins une couche intérieure supplémentaire est prévue, de sorte que l'épaisseur de la structure multicouches est adaptée aux dimensions du compartiment d'enfichage situé sous les contre-contacts (10A - 20D), et dans lequel également la largeur (21') de la structure multicouches (12) est adaptée aux dimensions du compartiment d'enfichage (19) situé sous les contre-contacts (20A - 20D).

2. Support de données portable fabriqué selon le procédé selon la revendication 1, **caractérisé en ce que** l'interface est une interface USB.

3. Support de données portable fabriqué selon le procédé selon la revendication 1, **caractérisé en ce que** la hauteur (17') et la largeur (21') de la structure multicouches sont adaptées aux dimensions d'une prise USB.

4. Support de données portable fabriqué selon le procédé selon la revendication 1, **caractérisé en ce que** le circuit intégré (4) est placé sur la face inférieure d'un module (3) introduit dans le corps de carte (2), sur la face supérieure duquel sont formés les contacts d'interface (CA - CD).

5. Support de données portable selon la revendication 4, **caractérisé en ce qu'**un deuxième circuit intégré (5) est réalisé dans le module (3), lequel est relié au premier et délivre à celui-ci un signal de cadence.
